Europäisches Patentamt

**European Patent Office**

Office européen des brevets

(11) Publication number: **0 000 259**

A1

(12) **EUROPEAN PATENT APPLICATION**

(21) Application number: **78300058.1**

(22) Date of filing: **20.06.78**

(51) Int. Cl.²: **G 01 B 11/27, G 01 N 29/00, H 04 R 29/00, B 06 B 3/04**

(30) Priority: **23.06.77 GB 26475/77**

(43) Date of publication of application:
**10.01.79 Bulletin 79/1**

(84) Designated Contracting States:
**BE CH DE FR LU NL SE**

(71) Applicant: **EUROPÄISCHE ATOMGEMEINSCHAFT (EURATOM),**
**Bâtiment Jean Monnet Plateau du Kirchberg Boîte Postale 1907,**
**Luxembourg (LU)**

(72) Inventor: **Bredael, Ivo,**
**Via Marconi, 24,**
**Ispra/Varese (IT)**

(72) Inventor: **Laghi, Fulvio,**
**via Montello 94,**
**Ispra/Varese (IT)**

(74) Representative: **Horton, Andrew Robert Grant el al,**
**BOULT, WADE & TENNANT 34 Cursitor Street,**
**London, EC4A 1PQ (GB)**

(54) **Process and apparatus for the alignment of a transducer forming part of a radiation generator.**

(57) A method and apparatus for aligning a transducer (2) in a housing (1) forming part of a radiation generator in which the optical or acoustic axis is made coincident with the mechanical axis (5). The alignment procedure comprises reflecting a beam emitted by the transducer (2) from concentric reflecting surfaces, $(M_1, m_2)$ the common axis (9) of which is rotated (8) around the mechanical axis (5) whilst orthogonal (x,y,z) corrections to the transducer (1) position are made in order to establish the position of maximum constant reflectance. These steps determine the focal position (0). The angular $(\alpha\beta)$ position of the reflecting surfaces $(M_1, M_2)$ is then adjusted by rotation around the focal position (0), again until a maximum constant reflection is obtained, and because these surfaces $(M_1, M_2)$ are coupled to a rotatable support (4) enclosing the housing of the transducer (1) the support (4) is repositioned accordingly. The support (4) is then secured to the housing (1).

4/4

FIG 4

0000259

- 1 -

PROCESS AND APPARATUS FOR THE ALIGNMENT OF A TRANSDUCER
FORMING PART OF A RADIATION GENERATOR

The invention relates to a process and apparatus for the alignment of a transducer forming part of a radiation generator, such as for example piezo-electric crystals used for generating ultrasonic waves. The invention also relates to an apparatus for carrying out the alignment of transducers enclosed in a housing.

In automatic control and measuring apparatuses such transducers are generally mounted in a housing which permits accurate positioning of the transducer with respect to the object to be examined. In certain cases however, when the positioning is very critical, the setting and alignment of a single transducer may take a rather long time.

It is further often necessary to be able to change the transducer in order to carry out experiments to other frequencies or to exchange the transducer for another one having the same characteristics, especially concerning beam properties, without having to change the initially defined settings.

In view of the fact that in practice transducers, although being theoretically equal, differ because of irregularities of the surface and internal structure, it is often not possible to exchange one transducer for another without affecting the accuracy of the measurement.

The invention is meant to overcome these inconveniences and to provide an effective and fast method for aligning and exchanging transducers while maintaining a quantitative and qualitative reproducible measurement which is especially important for transducers with optical and sonic properties such as ultrasonic generators or other types of sound and light beam generators.

Accordingly the invention comprises a method for the alignment of a transducer forming part of a radiation generator enclosed in a housing by causing the mechanical axis and the optical and acoustical axis to coincide, wherein a beam emitted by the transducer is reflected at concentric surfaces spaced apart in parallel relationship with each other, the common axis of which is parallel to and spaced laterally from the mechanical axis, and rotated around the latter axis in a first step, the transducer enclosed in its housing being translated in the orthogonal directions in a second step, which steps are carried out until the position of the transducer is adjusted in such a way that a constant maximum reflectance signal is obtained, whereafter the angular position of the reflecting surfaces, which are coupled to a rotatable support enclosing the housing of the transducer, is adjusted by rotation around the focal point determined by the first and second step until a constant maximum reflectance signal is obtained, the final step consisting in fixing the support to the housing.

The invention also comprises an apparatus for carrying out the above method comprising a transducer enclosed and fixable in a housing, to which housing is connected a rotatable support member, a mirror system including at least two concentric, spaced apart surfaces in parallel relationship, the common axis of which is rotatable around the mechanical axis, means to translate the transducer and housing in the orthogonal directions, means to rotate the mirror system about the mechanical axis, a rotatable support enclosing the housing of the transducer, means to rotate the mirror system around the focal point as determined, a coupling between the mirror system and the support, and means to fix the support to the housing in the aligned position.

Preferably the transducer consists of a crystal which is fixed and fixable in a housing, for instance by means of an adhesive such as a resin.

Preferably after the mechanical axis and the acoustical axis are made to coincide the angular position of the crystal is set by means of an auxiliary ring, which is rotatably coupled to the mirror system formed by the reflecting surfaces and which can be fixed to the housing. To determine the angular position after the aforementioned axes are made to coincide, the mirror system is rotated about the focal point determined after the combined aforementioned rotational and translational movements have been carried out, the auxiliary ring being coupled to the mirror system with a cord or with another means. The focal point is determined by the intersection of the mechanical axis with the plane of the first reflecting surface in the beam.

Preferably the mirror system consists of a bar, the top end of which is a reflecting surface and the other end, which is enlarged, forms a second concentric annular reflecting surface. The mirror system is preferably mounted on a Cardan system to carry out the desired translational movement in the orthogonal directions.

Reference is now made to the accompanying drawings in which:

Figure 1 is a cross-section of an embodiment of the invention;

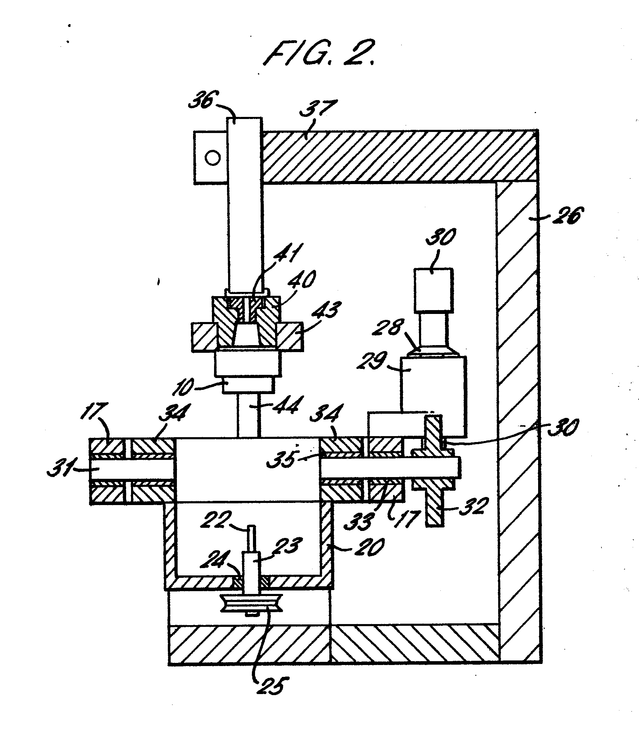

Figure 2 is a cross-section along the line II-II of Figure 1;

Figure 3 is a schematic representation of the essential steps of the alignment procedure; and

Figure 4 is a further schematic representation of the alignment procedure.

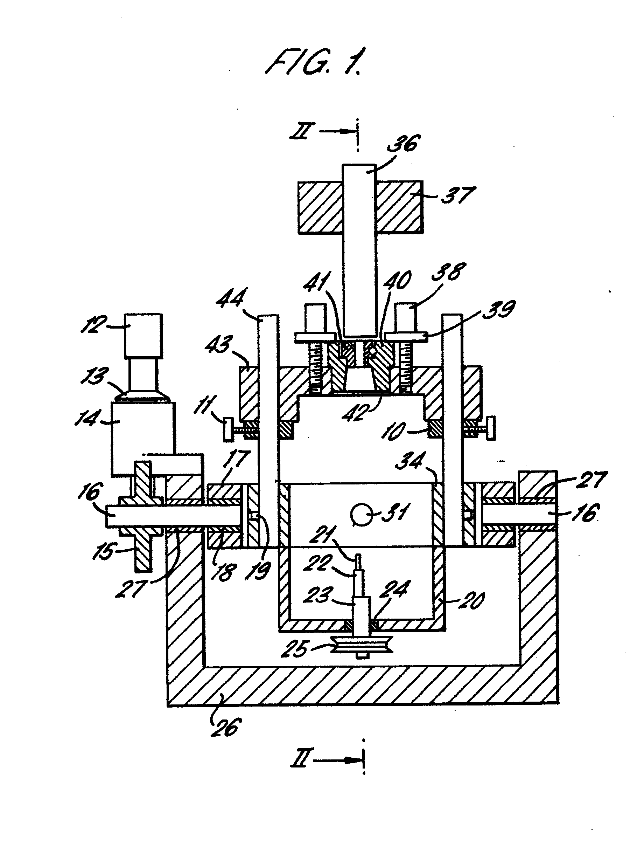

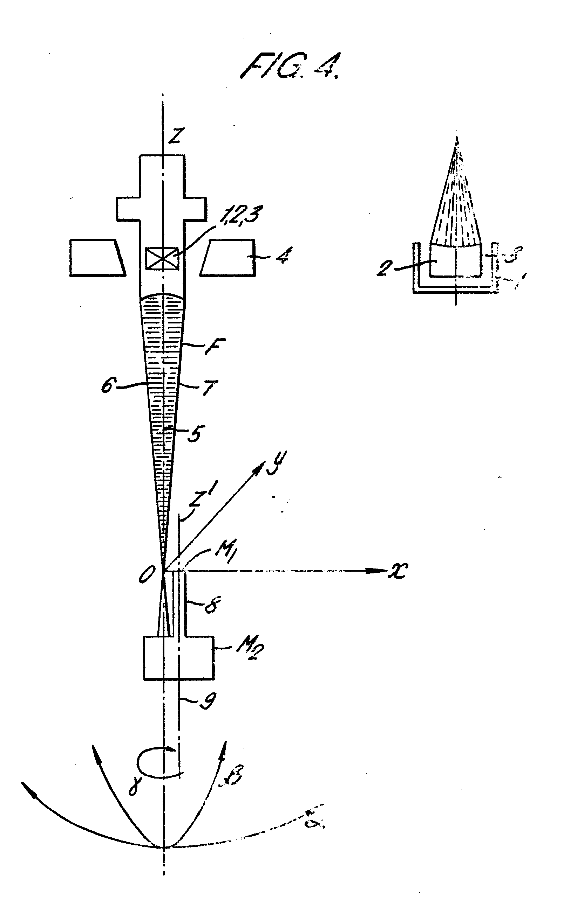

In Figure 4, 1 denotes a housing wherein the transducer, in this case a crystal 2, is present. The crystal can be fixed in its position by an adhesive 3. The housing is enclosed in an auxiliary ring 4, which can be turned around the crystal. The axis of the housing is represented by the dashed line 5, which defines the mechanical axis of the radiation generator. The lines 6 and 7 indicate the beam which is emitted by the crystal when activated and the focal point of which is at O when the alignment has been performed. X and Y show the orthogonal directions in O. At a small distance of the mechanical axis a double mirror system is present, consisting of a bar 8 with two reflecting surfaces $M_1$ and $M_2$, which are parallel and concentric. The axis of the mirror system is represented by the dashed line 9. The arrow $\gamma$ indicates that the axis 9 can be rotated around the mechanical axis 5. Arrows $\alpha$ and $\beta$ indicate rotations in respectively X and Y directions. The arrangement works as follows:

It is intended to align the mechanical axis with the acoustical axis of the ultrasonic beam F emitted by the transducer when activated. This alignment, which results in the sealing of the housing 1 in the auxiliary ring 4, which is used as reference, permits this ring during use of the transducer being utilized as a reference for the positioning as well as for the inclination of the beam. In use a first means, which is not shown, rotates the axis 9 around the axis 5 in such a way that the mirror system is submitted to an eccentric rotation around the axis. As is apparent from the drawing the enlarged section of the bar extends across the axis 5. A suitable means is for instance a Cardan system which enables an orientation in two planes. The two reflecting mirrors $M_1$ and $M_2$ are spaced apart at a distance which is determined by the focal characteristics of the transducer; if for instance the characteristics of the focal zone are as follows: -4(12mm)+6, i.e. between 8mm and 18mm, the distance between the two reflectors is chosen at 10mm; the distance of the transducer to the first reflector is then set at 8mm. In this way the first reflector is placed at the entrance and the second at the outlet of the focal zone of the transducer.

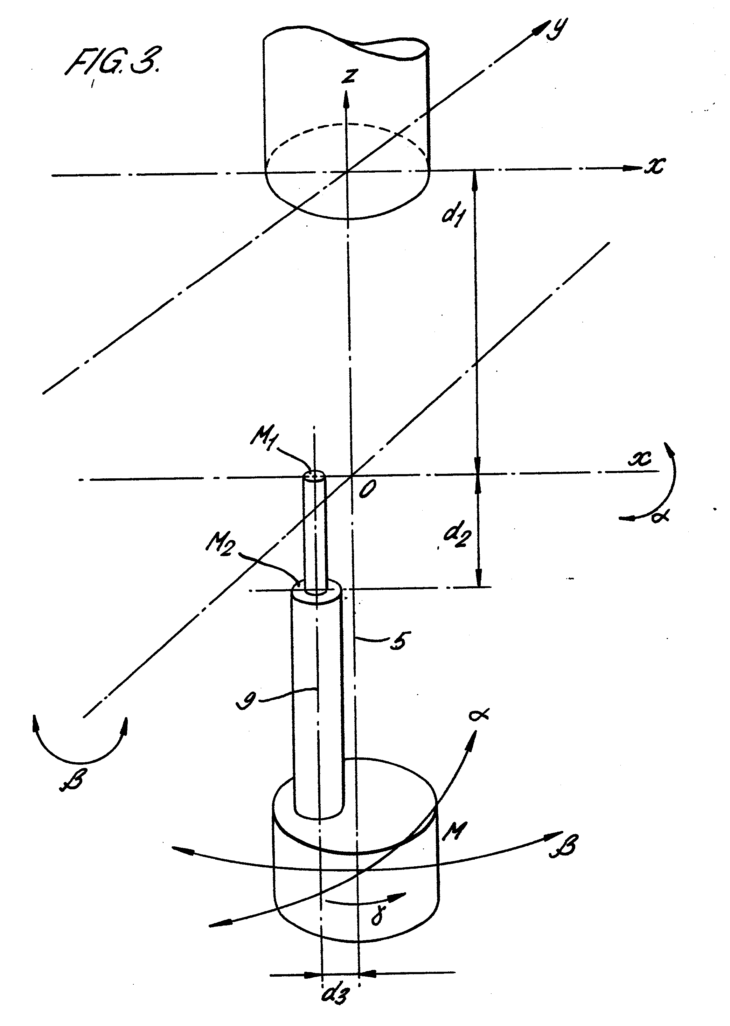

These values, which are indicated as $d_1$ and $d_2$ in Figure 3, are not critical because the sensitivity can easily be adjusted by controlling the amplification.

As shown in Figure 4 the second reflection surface extends in the direction of the axis 5 which gives rise to the eccentric movement. At the same time the eccentric movement is carried out by the transducer and housing inside the auxiliary ring are subjected to a translational movement in the orthogonal directions X, Y and Z. Finally the mirror system is by means of a third mechanism rotated round the intersection of axis 5 with the upper plane of mirror $M_1$ by means of a cord which forms part of the auxiliary ring.

The eccentricity indicated as $d_3$ in Figure 3 will be chosen at a higher value if the transducer is focussed in one point. The degree of eccentricity is determined by the difference of the coordinates (seen on the surface of the acoustical outlet surface of the transducer) of the housing of the transducer and the acoustical beam. This may be expressed in polar or cartesian coordinates.

The alignment process thus consists of three steps.

In the first step the mirror $M_1$, $M_2$ is put into rotation as explained above. In the second step the echo of the front reflecting surface is adjusted until a maximum constant amplitude is obtained by displacing the housing in the ring as explained above. When the echo signal is constant and at a maximum, the focal point, if any, is centred by symmetrical considerations. This becomes as explained point O of the generator.

By means of the third mechanism the angular position of the mirror system and consequently of the ring which is

coupled to the mirror system is adjusted until a maximum constant amplitude of the rear mirrors echo is obtained. Subsequently the housing is sealed to the ring in the position as obtained at the end of the third step. The principle as described is also applicable to other types of reference systems and is independent of the type of the mechanism by which the relative movements of the transducer and mirrors are effected.

The various steps which are carried out in the alignment procedure are for the sake of clarity separately illustrated in Figure 3, wherein the element and the mirror system are once more shown. The mirrors $M_1$ and $M_2$ are rotated in the direction of the $\gamma$ arrow by means of motor M.

This $\gamma$ arrow represents a rotation about the Z-axis. Arrows $\alpha$ and $\beta$ represent angular corrections in the orthogonal X and Y directions, which may for instance be carried out through a Cardan system. The arrows x, y and z represent the translational movements to which the transducer may be subjected in order to carry out focal distance corrections as well as eccentricity corrections.

In a frame 26 of the apparatus two axes 16 are each rotatably supported by a bearing 27. In both axes 16 a second bearing 18 is present which is connected to a first Cardan ring 17. On one of the axes 16 a gear 15 is fixed which engages with a worm 12, rotatably mounted in a bearing 14, fixed to frame 26, by which the Cardan ring 17 may be pivoted in respect of frame 26. A graduation 13 indicates the angle of rotation of ring 17. Perpendicular to axes 16, of which the centre lines are in a direct line with each other, two axes 31 are mounted in ring 17 through bearings 33, which axes carrying a bearing 35 each are present in a second Cardan ring 34. On one of these axes a gear 32 is fixed which engages with a screw 30 rotatably mounted in a bearing 29, through which the Cardan ring 34 may be pivoted in respect of ring 17. A graduation 28 may be present. Ring 34 is connected to a support 20 in which a bearing 24 is arranged of which the centre line coincides with that of both rings. In bearing 24 an axis 23 is provided with a pulley 25, which may be driven by a motor (not shown). The excentric mirror system is connected to axis 23 and comprises mirrors 22 and 21. Perpendicular to the plane of the axes 16 and 31 a set of bores is provided in both of which a bar 44 is fixed by means of a screw 19. Slidable along these bars 44 carrier rings 10 are positioned, which may be adjustably fixed in position by a screw 11. A support member 43 is supported by the carrier rings 10. The support member is provided with a central bore, of which the centre line coincides with that of the rings 17 and 34, in which an insert is rotatably seated at 40. The position of insert 40 may be fixed by means of a set of screws 38 with clamping flanges 39. Insert 40 is further provided with an excentrically stepped bore to accommodate element holder 41 within an excentrically continuing bore. Element holder 41 is rotatable in respect of insert 40 by means of a screw 42. To frame 26 a support member 37 is rigidly fixable, in which member a tube conductor 36 is adjustably fixable. The centre line of the tube conductor 36 coincides with that of the Cardan ring in a position of rest as follows from Figure 1.

0000259

CLAIMS:

1. A method for the alignment of a transducer forming part of a radiation generator enclosed in a housing by which the mechanical axis and the optical axis or the acoustical axis are caused to coincide, wherein a beam emitted by the transducer is reflected at spaced apart concentric surfaces in parallel relationship with each other, the common axis of which is parallel to and spaced laterally from the mechanical axis and rotated around the latter axis in a first step, the transducer enclosed in its housing being translated in the orthogonal directions in a second step, which steps are carried out until the position of the transducer is adjusted in such a way that a constant maximum reflectance signal is obtained, whereafter the angular position of the reflecting surfaces, which are coupled to a rotatable support enclosing the housing of the transducer, is adjusted by rotation around the focal point determined by the first and second step until once more a constant maximum reflectance signal is obtained, the final step consisting in fixing the support to the housing.

2. A method according to claim 1, wherein the reflecting surfaces are connected by a bar, a first reflecting surface being formed by the top end of the bar and a second by the enlarged lower end of the bar.

3. A method a according to claims 1 to 2, wherein the distance between the reflecting surfaces is determined by the focal zone of the transducer.

4. A method according to claims 1 to 3, wherein the first reflecting surface is at the entry of the focal zone and the second at the exit thereof.

5. A method according to claims 1 to 4, wherein the dimensions of the bar with reflecting surfaces are of the same order as those of the transducer.

6. A method according to claims 1 to 5, wherein the mirror system is mounted on a Cardan system.

7. A method according to claims 1 to 6, wherein the rotatable support is an auxiliary ring coupled to the reflecting system with a cord or with similar means.

8. A method according to claims 1 to 7, wherein the transducer is a piezo-electric or magnetostrictive crystal.

9. A method according to claim 8, wherein the crystal is an ultrasonic wave generator.

10. Apparatus for carrying out the method according to claims 1 to 8, comprising a transducer is enclosed and fixable in a housing to which housing is connected a rotatable support member, a mirror system including at least two concentric, spaced apart surfaces in parallel relationship, the common axis of which is rotatable around a mechanical axis, means to translate the transducer and housing in the orthogonal directions, means to rotate the mirror system around the mechanical axis, a rotatable support enclosing the housing of the transducer, means to rotate the mirror system around the focal point as determined, a coupling between the mirror system and the support, and means to fix the support to the housing in the aligned position.

11. Apparatus according to claim 10, wherein the mirror system consists of a bar, the top end of which being a reflecting surface and the enlarged other end forming a second concentric annular reflecting surface.

12. Apparatus according to claims 10 to 11, wherein the distance between the reflecting surfaces is determined by the focal zone of the transducer.

13. Apparatus according to claims 10 to 12, wherein the first reflecting surface is at the entry of the focal zone and the second at the exit thereof.

14. Apparatus according to claims 10 to 13, wherein the dimensions of the bar with reflecting surfaces are of the same order as those of the transducer.

15. Apparatus according to claims 9 to 10, wherein the mirror system is mounted on a Cardan system.

16. Apparatus according to claims 9 to 11, wherein the support is an auxiliary ring coupled to the mirror system by a cord or similar means.

- 4 -

17. Apparatus substantially as hereinbefore described with reference to Figures 1 and 2.

18. A method substantially as hereinbefore described with reference to Figures 3 and 4.

ARGH/SMJ/DR/TJ/EA002

1/4

FIG. 1.

2/4

FIG. 2.

0000259

FIG. 3.

FIG. 4.

European Patent
Office

**EUROPEAN SEARCH REPORT**

Application number

EP 78 30 0118

| Category | Citation of document with indication, where appropriate, of relevant passages | Relevant to claim |
|---|---|---|
| | **DOCUMENTS CONSIDERED TO BE RELEVANT** | |
| A | FR - A - 2 044 576 (SOCIETE PARI-SIENNE DES ANCIENS ETABLISSEMENTS BARBIER, BENARD & TURENNE)<br><br>* From page 2, line 27 to page 4, line 7; figures 1-3 * | 1 |
| A | FR - A - 2 252 558 (IBM)<br><br>* From page 1, line 34 to page 3, line 4, figures 1,2 * | 1 |
| A | US - A - 3 969 926 (P.A.WALKER)<br><br>* From column 1, line 47 to column 2, line 14; figure 4 * | 1 |
| A | US - A - 3 978 714 (D.S.SHRAIBER)<br><br>* Column 2, from line 19 to line 55; figure 1 * | 1 |

CLASSIFICATION OF THE
APPLICATION (Int. Cl.)

G 01 B 11/2
G 01 N
H 04 B 29/00
B 06 B 3/04

TECHNICAL FIELDS
SEARCHED (Int. Cl.)

G 01 B 11/2
G 01
G 01
G 10

CATEGORY OF
CITED DOCUMENTS

X: particularly relevant
A: technological background
O: non-written disclosure
P: intermediate document
T: theory or principle underlying
the invention
E: conflicting application
D: document cited in the
application
L: citation for other reasons

&: member of the same patent
family
corresponding document

The present search report has been drawn up for all claims

| Place of search | Date of completion of the search | Examiner |
|---|---|---|
| The Hague | 29-09-1978 | DUCHATELLIER |

0000259

European Patent
Office

| X | CLAIMS INCURRING FEES |

The present European patent application comprised at the time of filing more than ten claims.

☐ All claims fees have been paid within the prescribed time limit. The present European search report has been drawn up for all claims.

☒ Only part of the claims fees have been paid within the prescribed time limit. The present European search report has been drawn up for the first ten claims and for those claims for which claims fees have been paid,

namely claims:  1 to 16

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions, namely:

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: